(19) **Europäisches Patentamt / European Patent Office / Office européen des brevets**

(11) **EP 1 720 129 B1**

(12) # EUROPEAN PATENT SPECIFICATION

(45) Date of publication and mention
of the grant of the patent:
**09.09.2009 Bulletin 2009/37**

(21) Application number: **03818077.4**

(22) Date of filing: **25.07.2003**

(51) Int Cl.:
*G06T 7/00* (2006.01)    *G09B 29/00* (2006.01)

(86) International application number:
**PCT/ES2003/000391**

(87) International publication number:
**WO 2005/017834 (24.02.2005 Gazette 2005/08)**

(54) **METHOD OF STUDYING AND RESOLVING ENVIRONMENTAL PROBLEMS**

VERFAHREN ZUM UNTERSUCHEN UND AUFLÖSEN VON UMWELTPROBLEMEN

PROCEDE D'ETUDE ET DE RESOLUTION DE PROBLEMES ASSOCIES A L'ENVIRONNEMENT

(84) Designated Contracting States:
**AT BE BG CH CY CZ DE DK EE ES FI FR GB GR
HU IE IT LI LU MC NL PT RO SE SI SK TR**

(43) Date of publication of application:
**08.11.2006 Bulletin 2006/45**

(73) Proprietor: **Abella Gavela, Gerardo
28250 Torrelodones,
Madrid (ES)**

(72) Inventor: **Abella Gavela, Gerardo
28250 Torrelodones,
Madrid (ES)**

(74) Representative: **ABG Patentes, S.L.
Avenida de Burgos 16D
Edificio Euromor
28036 Madrid (ES)**

(56) References cited:
**JP-A- 5 061 962**        **JP-A- 11 073 100**
**US-A- 5 819 016**        **US-A- 6 038 389**

EP 1 720 129 B1

**Description**

**Object of the Invention**

The present invention refers to a procedure for studying and resolving environmental problems, contributing essential features of novelty and remarkable advantages with respect to means known and used to the same target in the current state of the art.

More specifically, the invention proposes the development of a procedure for studying and resolving specific problems occurring in environmental systems by adapting the characteristics thereof so that they allow being studied as if they were general fields (electromagnetic fields, gravitational fields, ...).

In this sense, given that the spatial arrangement of the elements making up the environmental and electromagnetic systems is a factor which determines and conditions their behaviour, the present invention provides a procedure that, taking into account the spatial distribution of the elements of the environmental system under study, allows abstracting certain characteristics (that are of interest for any given reason) peculiar to that environmental system and establishing a correspondence between each of said environmental characteristics and other characteristics that are peculiar to, for example, electromagnetic fields. This allows subsequently treating this environmental system or problem, transformed into a problem of electromagnetic fields, with the tools generally used to resolve problems related to the latter. The resolution found for the electromagnetic problem representing the environmental system can easily be translated thereto.

Also object of the present invention is the identification of the most usual problems occurring in the environmental systems that are to be studied, the procedure also offering likewise for finding the resolution.

The invention also refers to the handling which the environmental data must receive from their collection up until their processing.

The field of application of the invention obviously corresponds to the industrial sector dedicated to studying environmental or ecological systems, especially to studying and resolving environmental problems.

**Background of the Invention**

The space plays a predominant role in studying the environment insofar as the ecological or environmental processes that occur are strongly conditioned by the topological relationships of the elements of the ecosystem that is being studied. The interest thus resides in knowing whether a polluting spill performed in a certain area will affect other points more or less distant from it and to what extent. It is also important and desirable to have the ability to characterise the spatial and temporal behaviour of a spill such that this knowledge or "spill spreading law" may be used in order to predict what would take place if a spill with similar characteristics were to occur in another area.

There are other disciplines in science, electromagnetism, for example, in which there is a methodological body that allows addressing problems related to space property alteration, in this case electrical features, induced by the presence of electric charges more or less close to the area studied. It is thus possible to calculate with great precision the force that one electric charge is going to exert on another one located at a specific distance. The law is also known by means of which these interactions between charges occur. According to this well-known electrostatic law, the influence of one electric charge on another one decreases with the square of the distance.

Therefore, in this area of knowledge, electrostatics, there is only one law (which relates the influence of one charge on another one with the inverse of the square of the distance separating them) to describe the electrical properties in a space occupied by a set of more or less charged electric charges, and with a positive or negative polarity, and organised according to a certain spatial arrangement.

In ecology or environmental sciences, however, there are many different "laws" of space alteration by the object causing the disturbance of the space around it. These laws describing how the influence of a certain object on the environment varies as the distance thereto increases are rarely known. Contrarily to what occurs in electrostatics, it is not known a priori how the environmental alteration induced by objects of interest in ecology or environmental science will vary with distance as the distance to the object causing the alteration in the space properties increases. For objects such as fume-emitting factories, or for noisy objects, it is not known, a priori, how the concentration of a certain pollutant will decrease with distance, or what the level of acoustic pollution a two-lane (or four-lane) road would cause on an inhabited area located at a certain distance.

If it were possible to assign "charges" to the polluting capacity of a polluting source, or to the amount of noise emitted by a car, for example, and if it were also possible to say how and in what quantity the influence of such polluting source or noisy automobile decreases with distance, it would be possible to predict what would happen in new situations in which there were several polluting sources or noisy objects (automobiles, for example) arranged in different ways and each one "emitting" its pollution or noise with different intensities.

Therefore, if it were possible to identify the objects altering the properties of the environment around them for a specific environmental problem, as well as to quantify their environment-altering capacity according to distance (that is, if it were possible to define the law of variation of environment modification according to distance), and if the variable or variables that measures or measure such alteration meets or meet certain very general conditions mentioned below, then there would be means available to approach this environmental problem from the perspective of general field theory. But no method is yet known that allows said operations to be carried out.

Consequently, the present invention has established as a fundamental goal the development of a new procedure that allows relating or linking the results of classic field theory with certain aspects of ecological or environmental theory, such that specific and particular environmental or ecological problems may be susceptible of being treated by applying the results that classic field theory has made available. This goal has been entirely achieved by the procedure object of description below, and the features defined in claim 1.

**Summary of the Invention**

The procedure provided by the present invention allows linking an environmental problem with another one specific to general fields (similar to electromagnetic fields, gravitational fields, etc.) which suitably represents it within certain restrictions and for the aspects under study.

The electric charge concept offers a solid starting point for use of the classic field theory as the ultimate cause of an effect, as is the modification of the electrical features of the space. This modification of the features of the space around the electric charge is made explicit and appears in the form of an electric field, which is the object of study of electromagnetism. By analogy, the basic concept proposed for use in the present invention for the application of the results of classic field theory to environmental problems, is that of "environmental charge" as ultimate cause of an effect that is made explicit in the space, and which is related to physical manifestations that are the object of study of environmental sciences or ecology itself. For example: a factory emitting sulphurous fumes alters the space around it, in this case in a harmful manner for the environment. Its capacity for emitting harmful fumes is its "environmental charge" measured, for example, in tonnes/day spilt into the atmosphere, and the alteration of the space around it is manifest by an increase in pollution measured in number of polluting particles by cubic metre at all points around the factory.

The procedure proposed by the present invention allows identifying the configuring elements in the environmental system being studied, and assigning to these elements a functionality that will allow contemplating the environmental problem so that general field theory may be used to study it. The space is made explicit in the methodological body of general field theory, this is why this perspective has been adopted for approaching environmental problems in which space is a very important element, as we have mentioned. General field theory also accounts for the consequences of the spatial distribution of the variable or variables studied, and allows making predictions on the new distribution of these variables when certain changes occur in the area or space object of the study.

Once the elements of the environmental system are identified as "sources" or "sinks" for something that alters the environment around them (polluting substances, noise, heat, ...), the variable that allows evaluating these changes is defined. This variable is measured at different points of the area being studied, according to a sampling network designed to be as regular as possible. By "regular" it is intended to indicate that the network is rectangular and that the measurements are equispaced, located at the vertices of the rectangles constituting the sampling network. Thus, the "map" of effects induced by the active elements of the environmental system on the surrounding environment is constructed in this manner.

It is not necessary, in principle, for the sampling of these points to be performed according to a regular network. This is because measurements are not always taken where it is more desirable but where it is possible to take them. The results may be subsequently extrapolated, thus constructing a regular network from the data observed by means of geostatistical techniques, such as kriging, for example.

Once the regular network of observations is constructed, what is obtained is a matrix that is an "image" in the sense that it is a two-dimensional function, and it may be treated by means of field theory techniques implemented in algorithms peculiar to image processing. These techniques allow finding out, if not previously known, the location of sources and sinks, that is, locating in the space the position of the elements altering the environment, either by giving something to the environment (sources) or by extracting something from the environment (sinks).

From the "map" in which the active sources of the system are located, i.e. sources and sinks, and the "map" of their effects on the environment around them constructed from the values of the variable measuring the alterations induced by the active elements in the system, the "function or law of space alteration" induced by a source or sink may be obtained by applying the linear system theory.

This "function or law of space alteration" induced by a source may also be experimentally determined, the procedure to be followed in such case being indicated below.

From a given spatial distribution of "source" and "sink" active elements, and their corresponding "environmental charge" values, i.e. the source and sink "map", and knowing the "law of space alteration" that characterises their behaviour, the spatial distribution of that space alteration induced by that configuration of active elements may be predicted. That is, the "map" of the space alteration induced by the active elements of the system may be predicted, in terms of the variable chosen to measure such alteration.

**Description of the Drawings**

To complement the description that is being made and to aid towards a better comprehension of the features of the invention, according to a preferred practical embodiment thereof, a set of figures is attached as part of said description with an illustrating and non-limiting manner, in which the following is represented:

Figure 1 shows the geographical context of the studied area in the form of a general map of the area and the sampling points to be studied numbered and marked as black dots on the map.

Figure 2 shows, in red, within their geographical context, the sampling points that have been treated and for which the nitrate concentration values in ppm (parts per million) have been measured.

Figure 3 shows the sampled points isolated from their geographical context and the nitrate concentration values found for each one in ppm (parts per million).

Figure 4 shows the interpolated surface obtained by Kriging from the sampled points shown in Figure 3.

Figure 5 shows a map of isolines for the interpolated surface nitrate concentration shown in Figure 4. The separation between isolines is 10 ppm.

Figure 6 shows the original sampled points (white dots) superimposed on the interpolated surface using kriging obtained from those original points.

Figure 7 shows the Laplacian calculated on the map of induced contamination, i.e. on the interpolated surface of Figure 4. The brighter spots indicate the location and magnitude of the possible sources of pollution.

Figure 8 shows the location of the possible sources of pollution (in red) located on the Laplacian shown in Figure 7.

Figure 9 shows the location of the possible sources of pollution (in red) and the sampled points (in white) superimposed on the map of the area studied.

Figure 10 shows the point function, or law of space alteration or pollution produced by a point unitary charge characteristic of the area studied, obtained by means of the application of the linear system theory.

Figure 11 shows a perspective view of the point function shown in Figure 10.

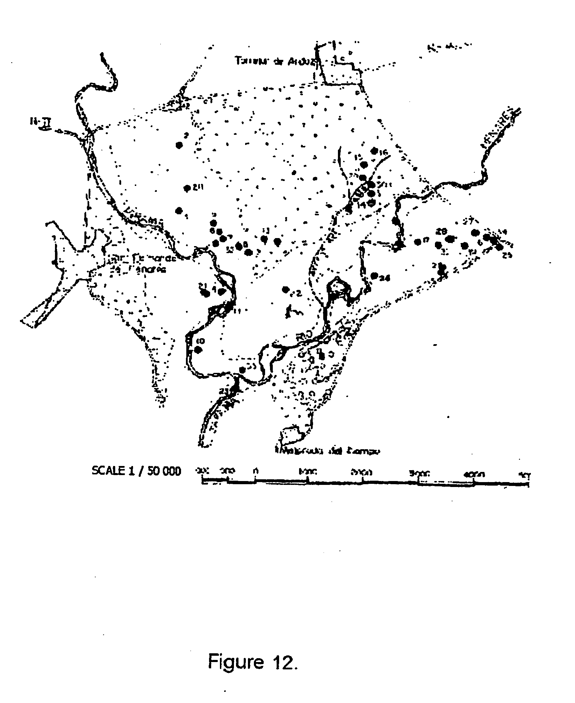

Figure 12 shows, a hypothetical distribution (red dots) of 7 sources of contamination (the location of 7 license applications filed at the Town Hall for installing new farms) superimposed on the map of the area studied. It is interesting to know the polluting effect induced by this hypothetical set of pollution sources (in red), assuming their location and the magnitude of the pollution charges claimed in the license applications are known, to give support to the Town Hall regarding the assessment of their impact on the studied area in nitrate concentration, i.e. to aid the corresponding administrative authority in deciding on granting these new licenses or not, and/or where appropriate, restricting the granted farming volume.

Figure 13 shows, isolated from its geographical context, shown in Figure 12, the distribution, location and values of nitrate concentration in ppm of the 7 simulated sources of pollution.

Figure 14 shows the nitrate concentration field, or predicted distribution of nitrate concentrations (pollution), obtained by convolution considering that the source distribution corresponds to that in Figure 13 (in Figure 12 the distribution can be seen in its geographical context) and the point function corresponding to Figure 10. This field is a simulation obtained from the mentioned data.

Figure 15 shows the isoline map of the simulated field calculated in Figure 14 with a separation between lines of 500 ppm for the hypothetical distribution shown in Figure 13 and the point function or law of space alteration shown in Figure 10.

Figure 16 shows the Laplacian calculated for the simulated nitrate concentration field shown in Figure 14. Observe the bright spots identifying the sources that originated this field.

In Figure 17 the agreement between the original sources (in red) shown in Figure 13, of the simulated field shown in Figure 14, and those calculated by means of the Laplacian shown in Figure 16, can be observed.

Figure 18 shows a diagram of the process of sampling and obtaining by interpolation (kriging in this case) a surface corresponding to the measured variable. That surface accounts for the samples taken at the points in which those sample values were obtained.

Figure 19 shows a summarised diagram of the process of locating sources and sinks by calculation of the Laplacian of the field obtained by kriging (arrows 1, 2 and 3) (the kriging calculation summary is shown in Figure 18) and the calculation of the law of space alteration, or point function, by applying the linear system theory (arrows 4, 5 and 6).

Figure 20 shows a diagram of the process of calculating the configuration of an unknown field from a known arrangement of sources (in this case simulated) and of the law of space alteration or point function either previously obtained experimentally or previously calculated (as is the case of the example studied).

**Description of a Preferred Embodiment**

The procedure according to the invention set forth in the foregoing, by means of which it is possible to link certain environmental subjects with some aspects of classic field theory is going to be described in detail below. In this sense, the procedure object of the present invention has been constructed taking into consideration a set of observable items common to all, or almost all, ecological or environmental systems. This set of items thus becomes the methodological guide that will allow, in a methodical and ordered manner, making the abstractions necessary in (almost) any ecological or environmental system in order to be able to treat the interesting aspects of that system from the point of view of general field theory.

The procedure object of the present invention comprises two parts. The first part is constituted by the methodological guide which allows, in view of a given environmental problem, abstracting the properties which will enable treating that problem from the point of view of general field theory. The second part of the procedure has to do with the detailed formulation of some of the problems usually occurring in ecology or the environment susceptible of being treated by field theory.

In brief, it can be said that the procedure proposed by the present invention allows seeing an environmental problem as a general field problem in those cases in which it is possible and even sensible. To that end the elements that make the environmental problem similar to a field problem must be identified. For the identification of these elements and their assimilation to their homologue within field theory, the analogy with electromagnetic fields has been used, such as was mentioned above.

In the procedure object of the present invention, the essential concept consists in the use of the concept of environmental charge (by analogy to the electric charge in electromagnetism) as the cause of the alteration of the environment induced by a certain object, and the measurement of that alteration, which will be called the scalar field of environmental potential (by analogy to the function of electric potential in electromagnetism). The procedure requires defining one or several variables, called indicator variables, which inform on the nature, amount and spatial distribution of the alteration or alterations of the environment induced by that object (the spatial distribution of the measured values for each one of them). The model also requires identifying the object causing the alteration of the environment, the assessment or quantification of its environment-altering capacity, as well as the quantification of the law describing the manner in which that object alters the environment according to distance.

It is possible to consider other environmental problems in which, instead of having a scalar potential field, there is directly a vectorial field. Being orientated magnitudes, they are vectorial magnitudes and they allow deducing the underlying scalar potential field with the techniques used to find the electric potential in electrostatic fields. It is consequently estimated that the approach adopted is sufficiently general so as to be able to treat situations in which what is measured is not a scalar potential field, but a vectorial field: defensive or aggressive reactions, particle flow rates, or any other vectorial magnitude.

Methodological Guide Definition: Fundamental Concepts of the Procedure

1) There are objects of interest to the environment that have the property of altering the space around them (a factory emitting sulphurous fumes, for example).

2) This alteration induced by the object of interest is measurable (measuring the atmospheric pollution caused by the emitted fumes).

3) The space alteration considered is specified by some variable that, as said in point 2, is measurable, and that hereinafter will be called "indicator variable" (the indicator variable at hand will be the number of polluting particles by cubic meter at each point of the space around the factory).

4) The values of that indicator variable chosen as space alteration indicator must be scalar (in fact, a pollutant concentration is measured which is scalar, such as temperature or distance).

5) It is necessary to know the values of the spatial distribution of the indicator variable before the presence of the object altering the space around it in the area studied occurs, since otherwise it would not be possible to assert that this space has been altered by the presence of the object of interest (it must be known whether the air was already contaminated by sulphurous fumes before the factory was located there, and in that case, the distribution of the pollution concentrations prior to the installation of the factory must be known).

6) The modification of the space around the object by that object may be produced by adding something to that space or by extracting something from that space.

7) Any object that alters the space by adding something that was not previously present in that space (or if it was already present, increases the amount of that observable thing, for example, fumes) will be called "source"

8) Any object that alters the space by extracting something that was previously present in that space (destruction of the ozone layer) will be called "sink".

9) The space-altering capacity of a source or a sink will be called "environmental charge" of that source or sink.

10) One same source or sink may simultaneously induce the alteration of one same space in several different manners. These different simultaneous space alterations may be specified by the observation of other such indicator variables (the factory may emit not only sulphurous fumes, but also dioxins, carbon dioxide, carbon monoxide, all these measurable in the form of concentrations).

11) When there are two or more environmental charges (sources or sinks) causing the alteration of a given space, the alteration at each point (specified through the value of the indicator variable measured at that point) must be the sum of the effects of each environmental charge on that point. That is, the space alteration at one point is considered additive: it is obtained considering the individual effects of each environmental charge on that point, and subsequently adding them up.

12) The previous point also presupposes the use of the principle of superposition. That is, the final situation must be reachable by "superimposing" the situations independently created by each of the elements in the system.

13) The altered space which is manifest by means of the spatial distribution of the values of the indicator variable is a two-dimensional or three-dimensional scalar function, and will be called environmental potential scalar field with respect to "name of the indicator variable" (the three-dimensional distribution function of each fume pollution value around the factory will be the scalar environmental potential function of sulphurous particle concentration).

It is evident that the content of point 9 is that which constitutes in the most evident manner the use of the analogy between "electrostatic fields" and "environmental fields". In fact: an electric charge is a source that alters the space around it, so that this alteration is specified by calculating the scalar electric potential function produced by the former around it and which is manifest by means of an electrostatic field of a vectorial nature which, the greater the electric charge producing it, the greater it will be. The spatial distribution of that potential function may be obtained by assessing the vectorial field associated with it and which is called electric field. In electrostatics, one of the classic problems consists in finding this electric potential function through measuring the vector field (electric field) associated thereto. In the procedure set forth by the invention, that is in the case of environmental fields, it starts directly from the knowledge of this environmental potential function and making some reasonable simplifications and assumptions on these environmental fields and charges, the results of classic field theory (that applied to electrostatic, electromagnetic and gravitational fields) may be extrapolated to environmental fields.

What is proposed in this procedure is to contemplate the objects of environmental interest that are being studied as if they possessed a "charge" modifying the space (or some properties of the space around them), and making such modification quantifiable. What is being done, ultimately, is to consider certain environmental entities as charges that produce fields and, by analogy to electromagnetic charges and fields, to apply the very developed methodology for the study of the latter to this environmental problem.

The methodological tools to be used in the procedure for resolving environmental problems are: field theory derived from vectorial analysis, signal and sampling and linear system theory, the Fourier transform for the handling and operation with two- and three- dimensional functions, and image and computation processing techniques that reside on results coming from the theories mentioned.

Procedure restrictions:

As indicated above, there are certain procedure restrictions that will be considered below:

1) The chosen indicator variable must be scalar (temperature, concentration, noise level...).

2) The values of the variable to be studied must be known at each point of the area to be studied before the alteration of the studied area occurs. The values of the scalar field to be studied shall be, at each point, the difference between the values after the space alteration and the values before such alteration. For example, if the level of a certain pollutant that appears after the installation of an industrial complex in an area is being studied, the previous level of that pollutant will be zero. If in that same area another factory is installed and the total pollution is measured afterwards, that contributed by the new polluting source will be the difference at each point.

3) The effects produced by several different sources on a same point must be additive (if a polluting source contributes $\underline{x}$ mg/l on a certain point and another different source contributes $\underline{y}$ mg/l on the same point, the pollutant level at that point must be $(x+y)$ mg/l).

4) The design of the sampling and measuring network of the area must be sufficient (Nyquist theorem) so as to "reconstruct" the field of measurements by means of any suitable interpolation technique, kriging for example.

5) The measurement network obtained and which defines the scalar potential field, or in other words the spatial distribution of the measured indicator variable values, must be regular to facilitate its treatment with the chosen image processing techniques.

6) The field of measurements of the studied area must be, at least in parts, continuous, smooth, and with first and second partial derivatives.

7) The temporal aspects of the phenomenon to be modelled are treated performing different field measurements in the same places, but at different moments. The object of this measure is to construct a model in which the variation pattern of the law of alteration of the space around the object of interest is known, not only in space but also in time. Thus the phenomena may be studied, taking into account the temporal component, as a succession of spatial distributions, each one deducible from the previous one. This would be the study of the transient regime of our system. In this transient regime the magnitudes of the environmental charges, their spatial location, and even the law of space alteration induced by these charges may vary with time.

There are, however, particular cases of interest for the study of a phenomenon when a state has occurred which may be considered as of a certain equilibrium. There would thus be an extension of the model which could be qualified as a "quasi-stationary" regime. Naming it a quasi-stationary regime results from the fact that such stationary situation is different for each time period in which the study is chosen to be performed. This means that the study of the space will begin when a certain specifically determined degree of equilibrium is reached. In other words, the validity of the model is restricted to the time elapsed from when the emitting source or sources begin to act, until the moment in which the measurements are taken. When the electric field produced by a charge in its immediacy is studied, it is assumed that in the instant in which the charge appears in a space in which previously there was nothing, that space is altered, and an electric field induced by the charge can be measured therein almost immediately. What is happening is that the time elapsed from the situation of non-existence of fields in that region of the space until the presence of the field is detected is so small that it is not taken into consideration (in electrostatics). In the case of environmental processes this is not generally the case and the change of the space from one situation to another requires a certain lapse of time that will be called "time necessary to reach the measured situation". There will therefore be a different spread model for each instant elapsed from the beginning of the emission from the source until the present moment. The knowledge of the process to be studied and the environmental consequences derived from it is therefore very important. Based on this knowledge, the time that must elapse from the beginning of the emission until the field measurement will be chosen so as to be able to predict what will happen in another location when an emission occurs and the same amount of time elapses as in our model. The idea is that sometimes only knowing what happens when a certain amount of time has elapsed, not the intermediate situations, is of interest. If the law of space alteration is studied for such a time period and there are no variations over time in the law of alteration induced by it, there will be a situation of a quasi-stationary regime.

Detailed Formulation of the Problems to be Solved

Basically, the problems intended to be resolved may be listed as the following:

1. Experimental determination of the law of surrounding space alteration due to an emitting object in order to later predict what may happen in other places in case in these places there may be an object (or objects) similar to that (those) studied regarding its law of space alteration; in terms of the electromagnetic analogy: experimental field determination produced by a given charge in order to predict the field induced by a given spatial arrangement of charges.

An observable object produces a manifestation that alters the space around it in a quantifiable manner. The measure of such space alteration that is of interest, set in relation with the distance and orientation with respect to the emitting source, will allow determining the behavioural law of such quantitative manifestation of the space alteration produced by the emitting object around it. Once this law has been experimentally determined, what will occur in other locations if an emitting source is located there, the law of space alteration of which is similar to that found (varying perhaps the emitting capacity of the source) may be predicted. For example, a factory that emits fumes to the atmosphere has a polluting "charge" causing a space alteration (the air quality in its proximity is degraded). This alteration is quantifiable by measuring, for example, the amount of solid particles per cubic meter of air every 100 meters from the geometric centre of the factory up to a distance of 2 Km. in several directions. A possible characterisation of the "field" generated by a factory of this kind would thus be obtained. The use of this model will allow predicting what will happen if one or several emitting sources of this kind with the same or different emitting capacities are placed in an area of given characteristics.

2. Determination of the location of the emitting sources and the emitting intensity of each one of these from the field measurement or as a result of the alteration produced by one or more emitting sources arranged on the area studied; in terms of the electromagnetic analogy: determination of the spatial arrangement of charges that produce a certain field and of the magnitude of each one of those charges.

There is an altered area and the magnitude of that alteration on that area is measured. The spatial distribution of the new aspect of the altered area is thus obtained. That is, what is being measured is a field produced by an arrangement of charges the location and emitting intensity of which is unknown, and both magnitudes are to be determined: the arrangement of the charges producing that field of measurements and their emitting capacity.

3. Determination of the law of space alteration from the field of measurements taken on the altered space and of the location on that space of the emitting sources (either because their location were previously known or because it was determined as described in the previous point); in terms of the electromagnetic analogy: determination of the law of space alteration produced by a given charge (from a known field on which an also known arrangement of charges act) in order to be able to predict the field induced by another given spatial arrangement of charges.

Detailed Solution of the Problems Set Forth

Detailed below at some length is the methodology for resolving each one of the problems described in the previous section.

1. Experimental determination of the field produced by a given charge to thus be able to predict the field induced by a given spatial arrangement of charges.

For resolving the problem described in part 1 of the previous heading (Detailed Formulation of the Problems to be Solved), it is necessary to carefully determine the environmental variable to be studied, and once determined see if it adjusts to the demands of the proposed procedure described in the "procedure restrictions" section.

1.1 Experimental determination of the field produced by a given charge;

In order to perform the experimental determination of the field produced by an "environmental charge" the first thing that must be known is the location of the emitting source before it starts to emit and the spatial distribution of the variable, which will allow evaluating the space alteration around the emitting source. After this source has begun to emit and after the time necessary for the effects of the space alteration around the source to be noted has elapsed, measurements of the chosen variable measuring the space alteration around the emitting source are taken. What is going to be measured is a set of values of the variable and it is necessary to know the spatial distribution of that variable before the emission starts, i.e. the initial conditions.

The set of values taken around the emitting source must be obtained, when possible, according to a sampling network designed such that it is possible to infer the distribution of the variable around an emitting source with the most precision possible with a minimal set of measurements. Ultimately, what is being sought is the space alteration variation pattern around the source in relation to distance. It is appropriate to say that this variation may or may not show a radial symmetry with respect to the emitting source. It is necessary to know the initial conditions of the location in which the determination is performed. Once the sample values of the spatial distribution of the variable are taken it is necessary to subtract from them at each point of the distribution the value they had before the source started emitting. After this adjustment the interpolation of the variable values must be performed to obtain a regular network or matrix of values. This matrix which represents the spatial distribution of variable values must be divided by the maximum value at the emission point to make the value at the emission point equal to 1. This matrix must be carefully examined to find, if there were any, values that are inexplicable because they were high or low in the proximity of other values, and if necessary to smoothen such differences by different procedures. A good alternative consists in performing several determinations in the same area, taking care to correct the values with those that already existed previously, and averaging the distributions thus obtained.

A two-dimensional function is thus obtained which is, in a way, the law of space variation with respect to a specific variable that measures that alteration induced around it by an emitting source of unitary intensity.

1.2 Prediction of the field induced by a given spatial arrangement of charges.

Once this function or law of space variation with respect to a given variable is obtained, the space alteration induced by one or more emitting sources arranged in a certain known manner in a given location and with given emission intensities may be predicted. The location of the sources is in turn another two-dimensional function in which there is a matrix with all its values equal to zero except at the points in which the emitting sources are located. At these points the value to assign is that of the emission intensity of each of the sources.

By the convolution of the space alteration unitary distribution matrix with the situation and emission intensity matrix of each of the sources, the spatial distribution of the alteration of values of the space induced by the spatial distribution of emitting sources, each one with a given emission intensity or "environmental charge", is obtained.

The convolution operation is a complex process which is difficult to perform in the space domain and which also consumes a great amount of computational resources of time as well as memory. Therefore this operation is performed in the frequency domain calculating the Fourier transforms of both two-dimensional distributions and subsequently multiplying them. The matrix thus obtained is the Fourier transform of the convolution of both matrixes. By performing the inverse Fourier transform of this matrix the sought matrix is obtained in which the predicted values for that distribution of emitting sources with their ecological charges and applying the experimentally obtained law of space alteration can be observed. All the previous development finds its theoretical support in linear system theory, signal theory, and Fourier transforms. The techniques that allow carrying out these calculations in a fast, efficient and sure manner are derived from image-processing techniques and the Fast Fourier Transform (FFT) algorithm proposed by Cooley and Tukey in 1965.

To conclude this point it may be affirmed that it is possible to experimentally know the law of space alteration induced by an environmental charge (methodology set forth in point 1.1 of the present heading) and from this law we may predict the alteration that would be produced in a specific area in which a given spatial arrangement of sources and sinks appeared (methodology set forth in point 1.2 of the present heading).

2. Determination of the spatial arrangement of charges that produce a given field and of the magnitudes of each one of those charges.

From a set of measurements of the effect of a pollutant on the environment, for example nitrogen measured by the concentration of its species (ammonium, nitrites and nitrates) and the isotropic $^{15}N$ content of each one of them, the location of the original sources of those spills is to be identified, and the relative importance of each one of them quantified (resolution of problem 2). As can be appreciated, there are occasions in which it is interesting to know the possible location and emission intensity of the sources that have caused a specific altered space. This space must be sampled adopting the same cautions as in the previous point for the purpose of obtaining a scalar field matrix that is as detailed as possible. As in the previous case sometimes it is not possible to perform a sampling that is as exhaustive as would be desirable. In this case what is within reach is sampled, and aided by interpolation techniques of common use in geology, such as kriging, a representation that probably very much resembles the original real-world distribution is obtained. This set of values is a two-dimensional scalar field. If this field is smooth, continuous in the studied region and with calculable first and second partial derivatives, it will be called potential scalar field of the variable being studied, and its units are those of the variable studied: concentration, decibels, particle number ..., etc. If the gradient vectorial field associated to that two-dimensional potential function is being calculated, a representation of the quantity and direction of maximum variation at each point of the studied variable will be obtained. The units of this gradient vectorial field are the same as those of the variable, but by unit of length: variation of concentration / meter, decibels / meter, particle number / meter, ... Calculating the divergence of this vectorial field or, as set forth below, calculating the laplacian of the potential function, that is, of the measurement scalar field, what is obtained is a two-dimensional function showing the location of the sources and sinks that have given rise to that measured potential function and to their emission intensities and disappearance intensities, the latter in the case of sinks.

2.1 Validation and data preparation methodology

The measurements are scalar: for example the $NO_3$ concentration values measured in mg/l, taken over specific spatial coordinates (x,y). Therefore, a scalar value $\underline{z}$ is assigned to each point (x,y) over which a measurement of $[NO_3]$ has been taken, that is $z = f(x,y)$.

Thus a set of spatially distributed scalar values $z = f(x,y)$ ($[NO_3]$ values) is obtained.

It will be necessary to study the dynamic range of variation of these measurements between the maximum and minimum of the set of measured values and re-scale them to a range suitable for their graphic representation or subsequent study, for example between 0 and 255 which is the dynamic range normally used in image processing. If the measurements or sampling are made spacing them out regularly over a rectangular grid of known dimensions, a matrix of $[NO_3]$ values associated to a given spatial area will be obtained. The distance between the measurements provides of the resolution of the study. This matrix can be assimilated to an image, given that after all a black and white photograph is nothing other than a distribution of grey values on a regular grid, that is $z = f(x,y)$. Therefore, it may be visualised and processed with all image processing techniques.

As a result of this first data collection phase, it is expected that the size of the sampling grid can be determined such that sufficient information is obtained for the resolution which is sought to be achieved with the minimum number of samples.

It will probably be necessary to perform a two-dimensional interpolation in order to obtain a greater resolution, as has been previously mentioned. It will therefore be necessary to take additional samples in some of the interpolated points to validate the chosen interpolation method. Given the availability of mathematical and computational tools available, the requirement of a sampling performed over a regular grid is not decisive as it is possible to obtain a data matrix or regular image from irregularly sampled data.

2.2 Theoretical basis

Detailed below are, as a reminder, some definitions relating to scalar and vectorial fields and some important operators in the developments they follow, and the notation convention regarding vectorial and scalar magnitudes is pointed out.

Scalar field: is a rule (or function) which associates the value of a scalar amount to some or all the points of the space. They will be indicated by means of a Greek letter, φ for example.

Vectorial quantities: will be indicated by letters in bold. Vector **v** of coordinates x,y,z will thus be written: **v** = **x**i + **y**j + **z**k, **i,j,k** being the unitary orthogonal coordinate vectors of axes x,y,z, respectively.

<u>Vectorial field</u>: is a rule (or function) which associates the value of a vectorial quantity to some or all the points of the space. They will be indicated by an upper case letter or several lower case letters in bold as it is a vectorial quantity, for example **F** or **grad.**

<u>Nabla</u>: the differential operator $\nabla$ (nabla) is defined as: $\nabla = \partial/\partial xi + \partial/\partial yj + \partial/\partial zk$.

<u>Laplacian</u>: the operator $\nabla.\nabla = \nabla^2 = \partial^2/\partial x^2 + \partial^2/\partial y^2 + \partial^2/\partial z^2$, is called Laplacian

Once the data is prepared and filtered as described above, a scalar field $\varphi(x,y)$ is obtained which may be graphically represented, either as an image, i.e. as a distribution of grey levels, or by means of its level curves for specific values of the chosen variable ($[NO_3]$), equispaced and appropriately chosen.

General field theory finds its mathematical support primarily in vectorial analysis, which establishes that under certain very general conditions of continuity and derivability, which in this case are complied with as the samples come from a continuous distribution, a vectorial field called a gradient can be obtained from the initial scalar field.

In order to calculate the gradient of a scalar field, $\nabla$ is applied on itself, obtaining:

$$\mathbf{grad}\ \varphi = \nabla\varphi = \partial\varphi/\partial x\ \mathbf{i} + \partial\varphi/\partial y\ \mathbf{j} + \partial\varphi/\partial z\ \mathbf{k}$$

$\partial\varphi/\partial x$ , $\partial\varphi/\partial y$ , $\partial\varphi/\partial z$ being the first partial derivatives of $\varphi$ with respect to x,y,z.

The scalar field $\varphi$ which allows obtaining **grad** $\varphi$ by means of applying the operator $\nabla$ is called potential function of **grad** $\varphi$.

Applying operator $\nabla$ to this vectorial field **grad** $\varphi$ again by means of the scalar product, as both **grad** $\varphi$ as $\nabla$ are vectors, the divergence of **grad** $\varphi$ is obtained, which is a new scalar field. In fact $\nabla$ can be applied twice on $\varphi$, obtaining that

$$\mathbf{div\ grad}\ \varphi = \nabla.\mathbf{grad}\ \varphi$$

$$\nabla.\mathbf{grad}\ \varphi = \nabla.\nabla\varphi$$

$$\nabla.\nabla\varphi = \partial^2\varphi/\partial x^2 + \partial^2\varphi/\partial y^2 + \partial^2\varphi/\partial z^2$$

$$\nabla^2\varphi = \partial^2\varphi/\partial x^2 + \partial^2\varphi/\partial y^2 + \partial^2\varphi/\partial z^2$$

Therefore:

$$\mathbf{div\ grad}\ \varphi = \nabla^2\varphi$$

or:

$$\mathbf{div\ grad}\ \varphi = \mathtt{Laplacian}\ \varphi$$

However, this is the manner of calculating div **grad** $\varphi$, but in vectorial analysis the divergence theorem for a vectorial field, or Gauss theorem, as is known, indicates that:

$$\iint_S \mathbf{F.N}\ dS = \iiint_Q \mathbf{div\ F}\ dV$$

The integral to the left of the "=" sign is a surface integral measuring the flow of an outgoing vectorial field **F** through a closed surface S. The integral to the right of the "=" sign is an <u>integral volume</u> over a volume Q limited <u>by the surface</u> S.

This is the same as saying that:

$$\text{Div } F = \lim_{V_i \to 0} (1/V_i) \oint_S F.N \, dS$$

The divergence (which is a scalar field) of a vectorial field is an important value that measures at each point (x,y) the amount of flow per volume unit and time unit that crosses a certain arbitrary surface. At the points in which there is a "source" originating the calculated vectorial field **grad** $\varphi$, the divergence of this vectorial field is positive, whereas if it were negative there would be a "sink", and where there is neither a source nor a sink the divergence will be zero. In this manner the sources and sinks of the vectorial field obtained from $\varphi$ are located, which is the same as saying, using the same nomenclature as in the previous paragraph, that at the points in which there is a source originating the calculated vectorial field **grad** $\varphi$, the Laplacian of $\varphi$ is positive, and if it were negative there would be a sink, whereas where there is neither a source nor a sink the Laplacian of $\varphi$ will be zero.

It is likely that if what is being analyzed is soil pollution, the spatial distribution of pollutants and their concentrations are greatly influenced by the topography of the area and by the very nature of the soil. These are elements of great interest for the study of the procedure, its adjustment, its restrictions and of the possible corrective measures to be applied in order to consider this effect.

This section may be concluded, therefore, by saying that the theoretical development of the procedure set forth in this invention with possible application to the environment is provided for, which will allow identifying, from its effects on the natural environment, the possible source or sources of those effects and the relative quantification of the contribution of each one of them. This will allow also identifying the agents causing a pollution process and quantifying their responsibility in order to apply the "who pollutes pays" principle.

3. Determination of the law of space alteration produced by a given charge from a known potential scalar field induced by the action of an also known arrangement of charges, in order to thus be able to predict the field induced by another given spatial arrangement of charges;

3.1 Determination of the law of space alteration produced by a given charge from a known scalar potential field induced by the action of an also known arrangement of charges;

On many occasions the law of space alteration induced by a specific source as explained in section 1.1 of the present heading is not known or cannot be experimentally calculated, and only the scalar potential function seen in the previous section (section 2 of the present heading) is known. It is possible, from the spatial distribution of sources and sinks found by applying the methodology set forth in section 2 of the present heading and from the initial scalar field $\varphi$, to determine the law of surrounding space alteration (or point spreading function or point distribution function) that has caused this scalar field $\varphi$ from those sources.

Therefore: if there is an interest in determining the law of space alteration associated to those sources, the first goal consists, carrying out that set forth in section 2 of the present heading, in obtaining the scalar potential function of the altered space and obtaining thereafter the location and intensity of the sources according to that set forth in section 2 of the present heading. On occasions the location and intensity of the sources are known, in which case it is not necessary to determine them. The Fourier transforms for both functions are then calculated. By dividing the transform of the potential function by that of the location, the sought Fourier transform of the law of space alteration sought is achieved. By calculating the inverse Fourier transform thereof, the sought law of space transformation sought is reached.

This section can be concluded with the affirmation that the law or function of space alteration caused by a source or sink may be calculated from the arrangement or "map" of these sources and sinks and their "environmental charge" and of the potential scalar field measured in the area studied.

3.2 Prediction of the field induced by a given spatial arrangement of charges.

Again, the calculation of this law or function of space alteration in turn allows predicting how the distribution of a new scalar field will be if the location of the sources and sinks and/or their values are altered as set forth in section 1.2 of heading 1: Detailed resolution of the problems set forth.

Experimental Validation of the Procedure Object of This Invention

The generality of the general field theory has allowed it to be applied to certain problems to the environment at a theoretical level and very promising results have been found in the simulation experiments performed, which are in the process of being published as they are very recent and novel. However, it is considered that experimental contrasting of these results is necessary in order to assess the scope of their applicability to real environmental problems and, given the case, to show the working restrictions, simplifications and hypotheses under which general field theory may be used on the data concerning the specific problem, and the validity of its predictions.

A first approach to this experimental validation is shown in the **EXAMPLE** set forth below by way of illustration, where the application of this invention to a specific environmental problem is described.

## EXAMPLE

Description of the Problem

The case study below is a typical example of application of the invention to resolving an environmental problem. The data has been kindly provided by Dr. Isabel Herraiz, Professor at Universidad Autónoma, Madrid. This data comes from the study performed by Dr. Herraiz and her team in 1987 on nitrate-induced pollution on the confluence of the Henares and Jarama rivers (Madrid, Spain). This study was financed by the Office for the Environment of the Public Works Ministry. The goal of the study was double. On the one hand, and as the first goal, it involved knowing what the most probable sources of pollution were, their location and the contribution of each one to total pollution, such that the data obtained by sampling of the aquifer was explained by that source distribution. In terms of the nomenclature used in the present specification, this first goal can be posed as a problem of type 2 which is "Determination of the location of the emitting sources and the emitting intensity of each one of these from the field measurement or result of the alteration produced by one or more such emitting sources arranged on the area studied...." described in point 2 of the "Detailed Formulation of the Problems to be Resolved" section and in point 2 of the "Detailed Resolution of the Problems Set Forth" section, both sections belonging to the "Description of a Preferred Embodiment" heading of the present specification.

The second goal was to determine the law of space alteration induced by an emitting charge or polluting source and thus be able to predict what the distribution of the pollution would be if the arrangement of polluting sources were different in amount, location or polluting intensity with respect to the original sources found. Again, in terms of the nomenclature used in the present specification, it would be a problem of type 3, namely "Determination of the law of space alteration from the field of measurements taken on the altered space and of the location of the emitting sources on that space (either because their location was previously known or because it was determined as described for problems of type 2)." described in point 3 of the "Detailed Formulation of the Problems to be Resolved" section and in point 3 of the "Detailed Resolution of the Problems Set Forth" section, both sections belonging to the "Description of a Preferred Embodiment" heading of the present specification. Once the law of space alteration produced by a point and unitary charge is calculated and the new source distribution is given with regard to their spatial location and the intensities of each one of them, the new induced pollution distribution can be calculated and predicted using the methodology set forth in section 3.2 (identical to that set forth in section 1.2) of the "Detailed Resolution of the Problems Set Forth" section in the "Description of a Preferred Embodiment" heading of the present specification.

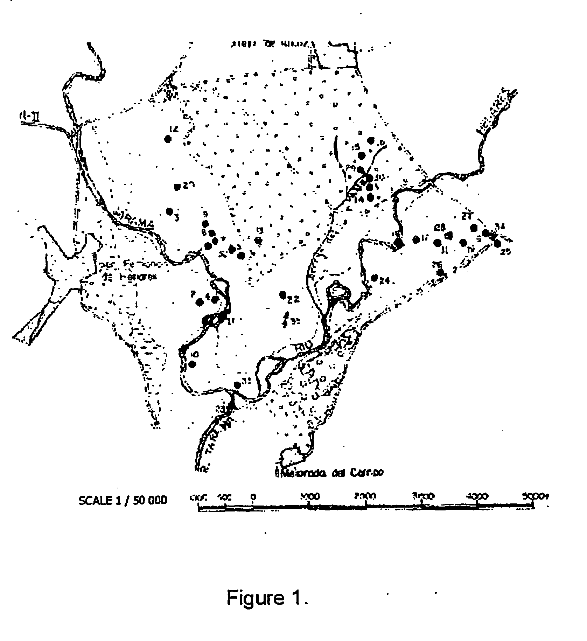

Therefore, there is a set of nitrate pollution measurements in the vicinity of the confluence of the Jarama and Henares rivers between Torrejón de Ardoz and Mejorada del Campo (Figure 1).

The nitrate concentration measurements in ppm (parts per million) or mg/l (milligrams per litre) correspond, as has been mentioned above, to water samples taken at the alluvial aquifer between the Jarama and Henares rivers. The intention is to know the location of the possible pollution sources from this set of measurements as described in point 2 "Determination of the spatial arrangement of charges that produce a given field and of the magnitudes of each one of those charges." within the "Detailed Resolution of the Problems Set Forth" section of the "Description of a Preferred Embodiment" chapter of the present specification, and to predict what would happen if the sources were others of a different intensity and located in the same or different places than those of the original distribution as described in point 1.2 "Prediction of the field induced by a given spatial arrangement of charges." within the "Detailed Resolution of the Problems Set Forth" section of the "Description of a Preferred Embodiment" chapter of the present specification.

Problem resolution, goal 1: To determine the location and intensity of the pollution sources

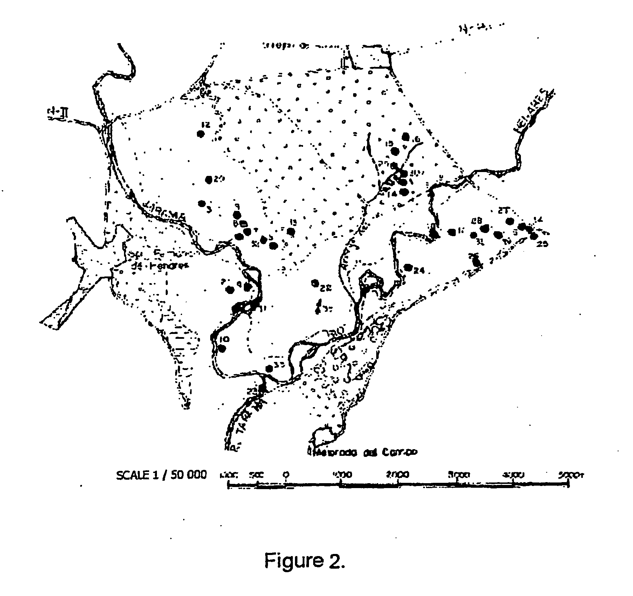

The 35 selected sampling points can be observed in Figure 1. Of these, the nitrate concentration measurement is available in the first 28 (Figure 2).

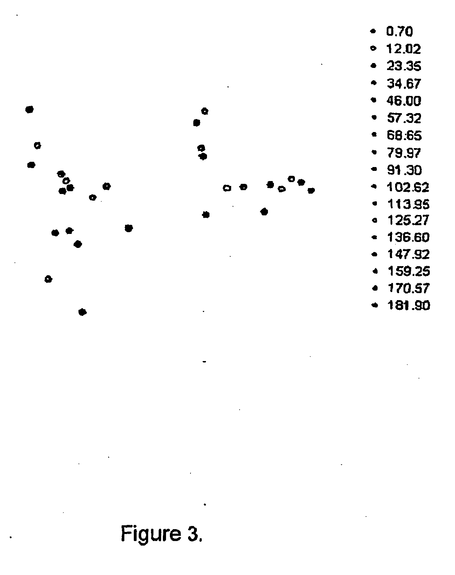

Figure 3 shows the arrangement of these points as well as the colour-coded values corresponding to each one. These same values are provided in the following table in which the point number appears in red and the nitrate concentration value at that point is shown in black.

| 1 | 92.9 | 2 | 8.1 | 3 | 10.6 | 4 | 1.1 | 5 | 18.4 | 6 | 28.6 |
|---|------|---|------|---|------|----|------|----|------|----|------|
| 7 | 9.2 | 8 | 11.8 | 9 | 15.4 | 10 | 18.7 | 11 | 6.7 | 12 | 0.7 |
| 13 | 15.0 | 14 | 181.9 | 15 | 99.1 | 16 | 33.8 | 17 | 14.9 | 18 | 5.9 |
| 19 | 33.5 | 20 | 18.6 | 21 | 59.6 | 22 | 26.4 | 23 | 3.6 | 24 | 28.3 |
| 25 | 15.9 | 26 | 18.2 | 27 | 12.2 | 28 | 25.4 | | | | |

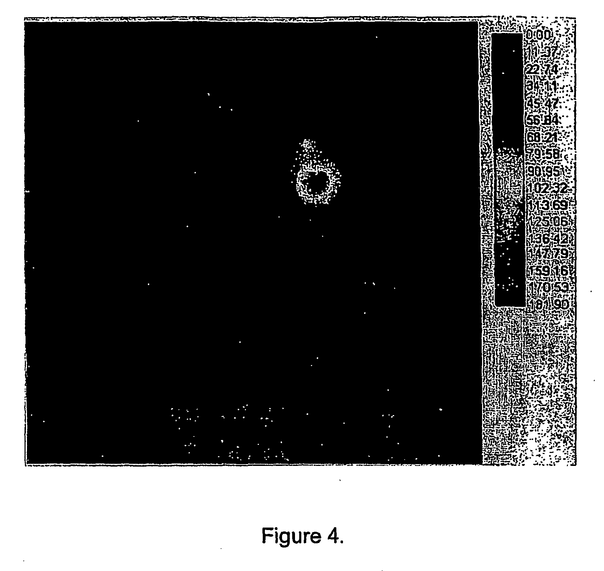

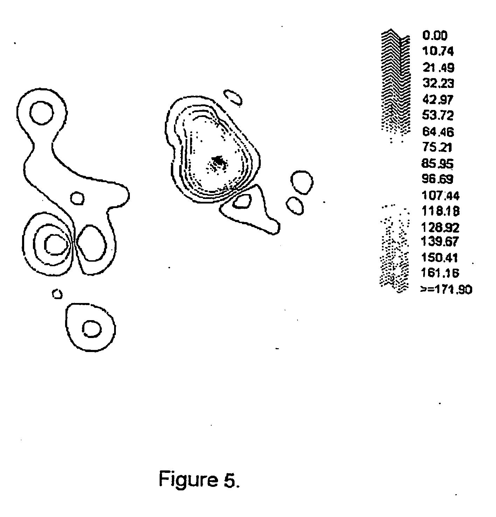

The interpolated surface shown in Figure 4 false-colour coded to represent the magnitude of the value of the function at each point, and in Figure 5 represented by its isolines with 10 ppm separation was obtained from these sampled points using Kriging techniques.

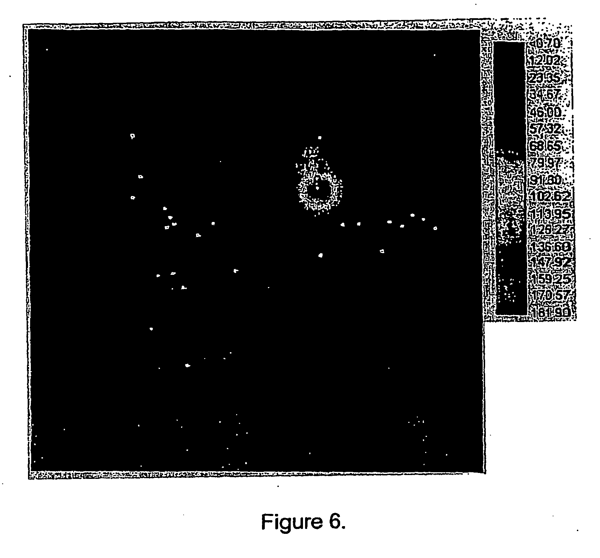

Figure 6 shows the superimposition on the surface of Figure 4 the sampled point set used to generate it. With this the validation and data preparation phase as described in section 2.2 of section 2 "Determination of the spatial arrangement of charges that produce a specific field and of the magnitudes of each one of those charges" within the "Detailed Resolution of the Problems Set Forth" section of the "Description of a Preferred Embodiment" chapter of the present specification, has concluded.

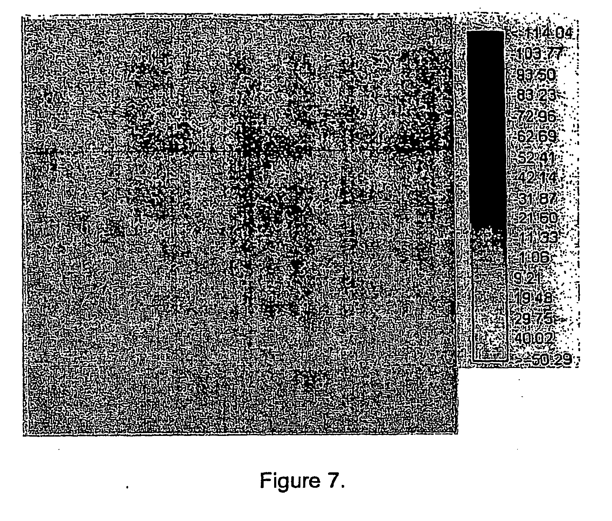

Next, and also according to the methodology set forth in point 2 of the "Detailed Resolution of the Problems Set Forth" section of the "Description of a Preferred Embodiment" heading of the present specification, the Laplacian of the surface shown in Figure 4 has been calculated, the result of which can be seen in Figure 7. In order to apply the calculation of the Laplacian, it was previously assured that the function is continuous and smooth in the location studied. If this were not so, it would have been necessary to smoothen the original function by means of a low pass frequency filter designing the appropriate filter.

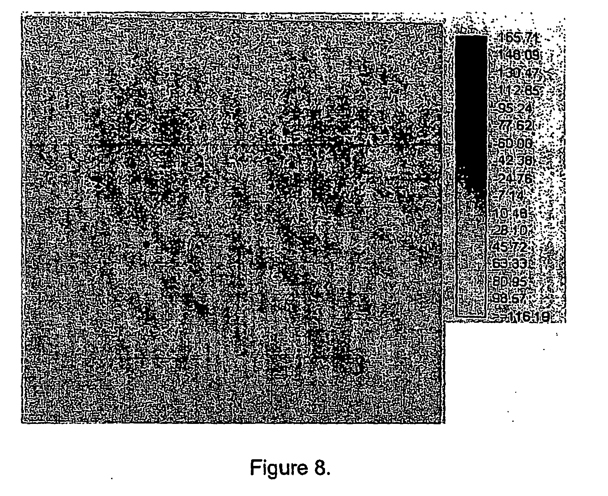

In Figure 7 three spots clearly brighter than the rest are clearly observed. These spots correspond to high positive values of the Laplacian of the function represented in Figure 4 and therefore may be considered as possible sources of contamination. The location of these sources which are superimposed on the Laplacian in Figure 8 has been determined on Figure 7.

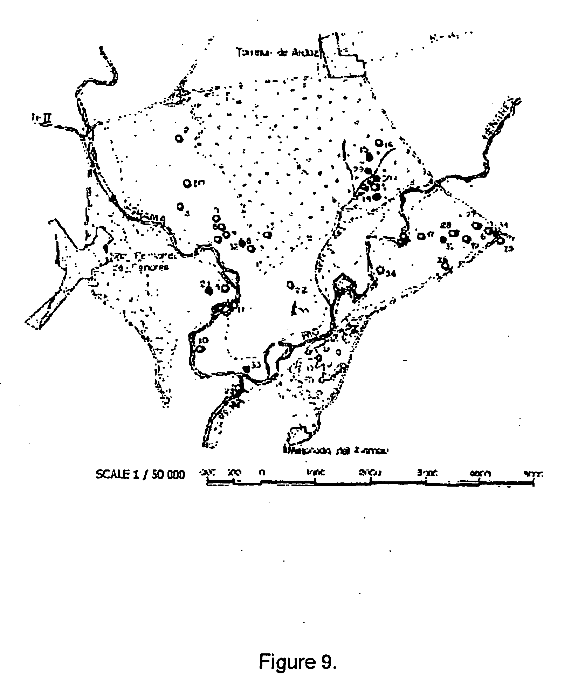

To facilitate the location of these possible pollution points on the land, these three points are represented on the original map in Figure 9.

Resolution of the problem, goal 2: To determine the law of space alteration induced by an emitting charge or polluting source and thus be able to predict what the distribution of the pollution would be if the arrangement of the polluting sources were different in quantity, location or polluting intensity with respect to the original sources found.

The problem is divided into two parts or goals that together form goal 2, namely:

Goal 2.1 To determine the law of space alteration induced by an emitting charge or polluting source.
Goal 2.2 To predict the configuration of pollution induced by a pollution source distribution different to the original.

The resolution of these two problems is described below.

Goal 2.1 To determine the law of space alteration induced by an emitting charge or polluting source.

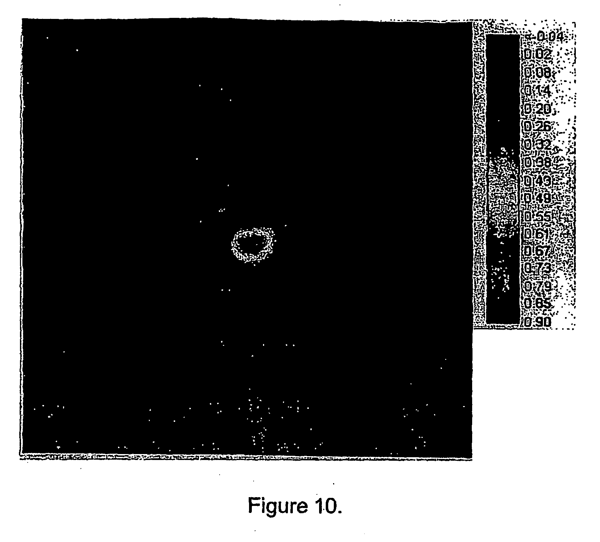

The following step in order to predict the configuration of a pollution field over a pollution source distribution different to the original is to determine the field produced by a single unitary pollution charge, or in other words: to calculate the point function or law of space alteration induced by that charge. To that end, the methodology set forth in the resolution of the problem of type 3 "Determination of the law of space alteration produced by a given charge from a known scalar potential field induced by the action of an also known arrangement of charges" of the "Detailed Resolution of the Problems Set Forth" section of the "Description of a Preferred Embodiment" heading of the present specification shall be applied, the result of which is the function shown in Figure 10.

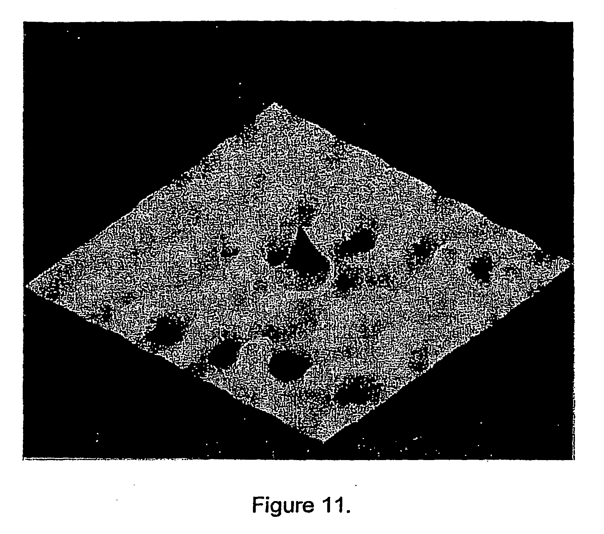

Figure 11 allows observing a perspective of this function that resembles a cone over a kind of dune field.

Goal 2.2 To predict the configuration of pollution induced by a pollution source distribution different to the original.

A new distribution of nitrate pollution sources has been created over the same area for which the point function has been determined. This new set consists of 7 pollution sources distributed as can be seen within their geographical context in Figure 12.

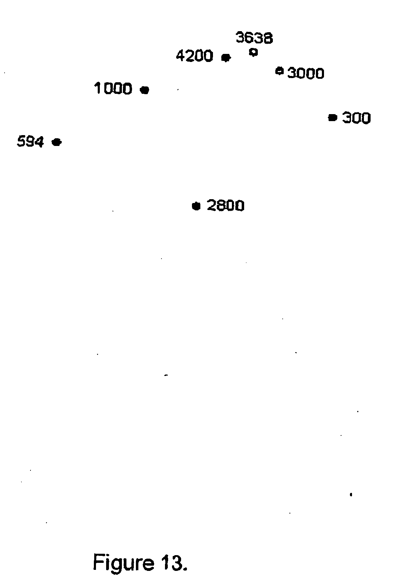

Figure 13 shows the 7 points or pollution sources with their nitrate concentration values in ppm and false-colour coded, out of their geographical context.

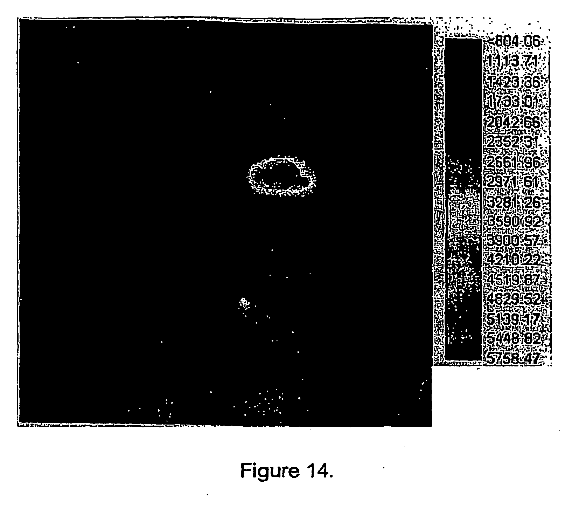

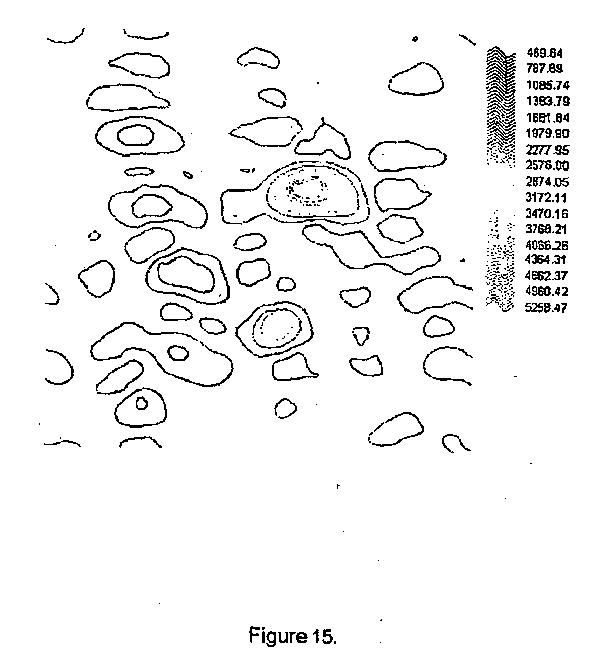

Knowing the source distribution (Figure 13) and the point function or law of space alteration (Figure 10), the field configuration which will result from this source distribution, with its locations and intensities, can be calculated. The result of those calculations, basically consisting in the convolution of the source distribution with the point function, or law of space alteration, as described in point 1.2 "Prediction of the field induced by a given spatial arrangement of charges." within the "Detailed Resolution of the Problems Set Forth" section of the "Description of a Preferred Embodiment" chapter of the present specification, are shown in Figure 14 and its isoline map in Figure 15. Finally, it attempts to answer the question of what would happen if the source distribution were like that shown in Figure 12 (within its geographical context) and 13 (as is used for calculations) with its corresponding intensities.

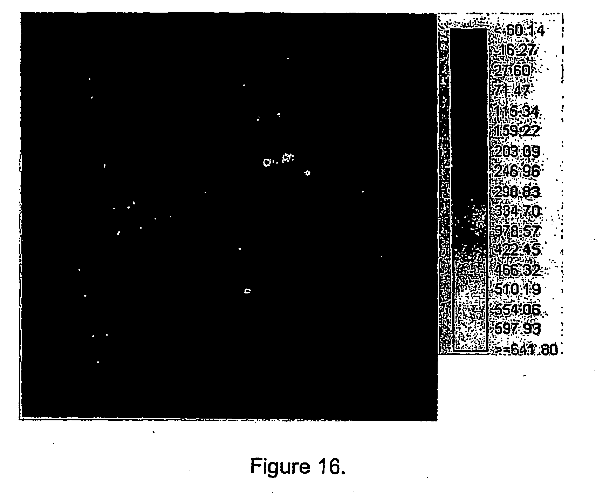

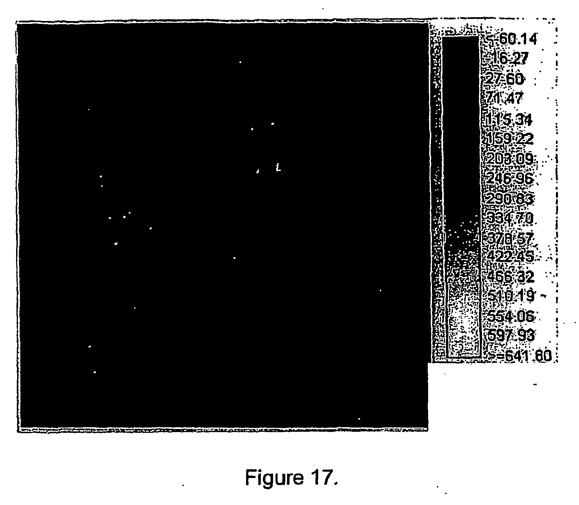

By way of confirmation, the Laplacian of this simulated field has also been calculated (Figure 14) to obtain its sources (Figure 16). As expected, the sources calculated (Figure 16) coincide in location and intensity with the initial sources as shown in Figure 17, in which the 7 original hypothetical sources (Figure 13) are superimposed on the Laplacian (Figure 16) calculated for the field that those same sources had caused (Figure 14), convoluting them with the law of space alteration shown in Figure 10.

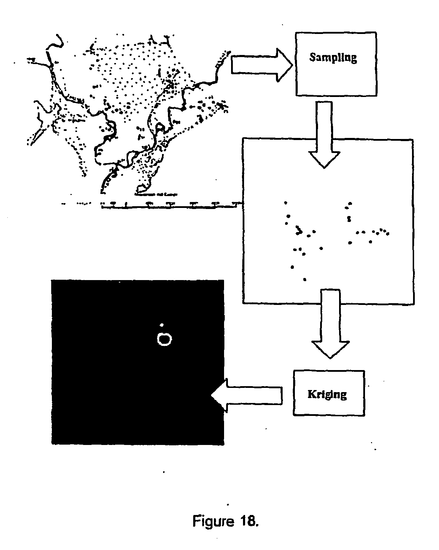

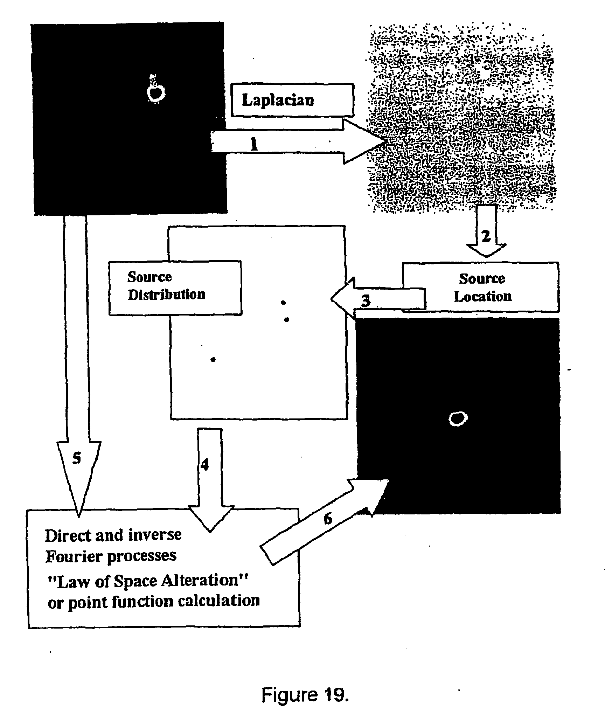

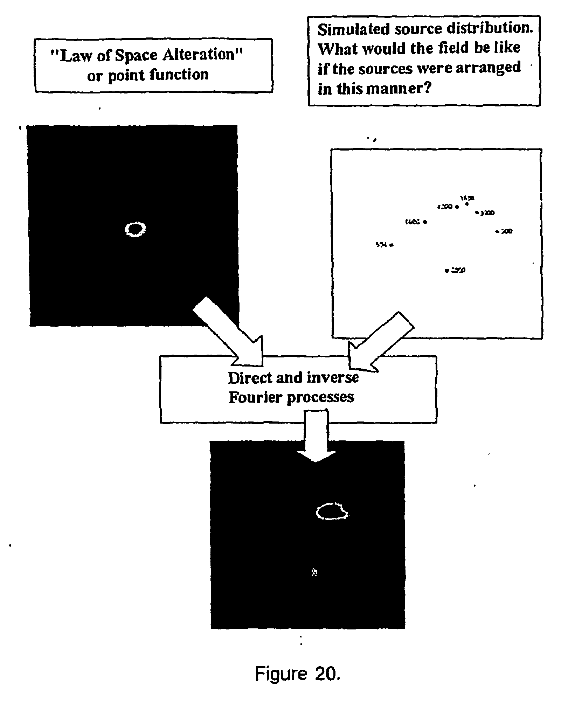

The most important processes used in this example are summarised in diagrammatic manner in figures 18, 19 and 20.

## Claims

1. A procedure for studying and resolving environmental problems in a located environmental system area, by using the general theory of fields, which comprises

   (a) using a physically measurable environmental indicator variable, said indicator variable being (i) a scalar variable, (ii) relevant for the environmental problem to be studied and solved in said area, and (iii) spatially distributed on said environmental system area in which said problems occur, and
   (b) considering the spatial distribution of the sources and sinks for said indicator variable which constitute the active environmental system elements,

   the procedure further comprising the steps of:

   - defining one or more of said indicator variables;
   - identifying said sources and sinks for said indicator variables;
   - for each indicator variable, measuring said indicator variable, at different points of said located environmental system area, and interpolating the measurements in order to obtain a matrix with a regular sampling when the measurements cannot be performed in a uniform and regular manner, said matrix relating the effects induced by said sources and sinks in said area; and
   - applying the general theory of fields implemented in image-processing algorithms to said matrix, resulting in images or two-dimensional functions representing the measurements of the selected indicator variables, in order to locate the sources and sinks and to determine the relative charge, i.e. space-altering capacity, with which each source or sink contributes to the spatial distribution of said indicator variable.

2. Procedure according to claim 1, which further comprises obtaining the space-alteration function of an indicator variable induced by a unitary source or sink, and, optionally, predicting the spatial distribution of said indicator variable by using said space-alteration function for said indicator variable for a different sources and sinks spatial distribution.

## Patentansprüche

1. Verfahren zur Untersuchung und Lösung von Umweltproblemen in einem bestimmten Gebiet eines Umweltsystems unter Verwendung der allgemeinen Feldtheorie, das die folgenden Schritten aufweist:

   a) Verwenden einer physikalisch messbaren Umweltindikatorvariable, die

   - eine skalare Variable ist,
   - relevant für das zu untersuchende und zu lösende Umweltproblem in dem Gebiet ist, und
   - räumlich in dem Gebiet des Umweltsystems verteilt ist, in dem das Problem auftritt, und

   b) Berücksichtigen der räumlichen Verteilung der Quellen und der Abflüsse der Indikatorvariable, die aktive Elemente des Umweltsystems darstellen,

   das des Weiteren folgende Schritte aufweist:

   - Definieren einer oder mehrerer Indikatorvariablen,
   - Bestimmung der Quellen und der Abflüsse für diese Indikatvrvariablen;
   - für jede Indikatorvariable, Messen dieser Indikatorvariablen an verschiedenen Punkten des bestimmten Gebiets des Umweltsystems und Interpolieren der Meßergebnisse, um eine Matrix mit einer gleichmäßigen Probenverteilung zu erhalten, falls die Messungen nicht in einer gleichmäßigen und regelmäßigen Weise durchgeführt werden können, wobei diese Matrix in Zusammenhang mit den Wirkungen der Quellen und der Abflüsse in diesem Gebiet steht; und

- Anwendung der in bildverarbeitende Algorithmen implementierten allgemeinen Feldtheorie auf die Matrix, die Bilder oder zweidimensionalen Funktionen als Ergebnisse liefert, die die Messungen der ausgewählten Indikatorvariablen darstellen, um die Quellen und die Abflüsse zu bestimmen und die relative Ladung, das heisst die Fähigkeit der Veränderung des Raumes, zu bestimmen, die jede Quelle oder jeder Abfluss zur räumlichen Verteilung der Indikatorvariable beiträgt.

**2.** Verfahren nach Anspruch 1, das zusätzlich die Erzeugung der Funktion der Raumveränderung einer Indikatorvariablen aufweist, die von einer einzelnen Quelle oder einem einzelnen Abfluss verursacht wird, und optional die Vorhersage der räumlichen Verteilung dieser Indikatorvariablen unter Ausnutzung der Funktion der Raumveränderung dieser Indikatorvariablen für eine unterschiedliche Verteilung der Quellen und der Abflüsse aufweist.

## Revendications

**1.** Procédé d'étude et de résolution de problèmes environnementaux dans une zone localisée d'un système environnemental, en utilisant la théorie générale des champs, ledit procédé comprenant:

(a) l'utilisation d'une variable indicatrice environnemental mesurable physiquement, ladite variable indicatrice étant (i) une variable scalaire, (ii) pertinente pour le problème environnemental à étudier et à résoudre dans ladite zone, et (iii) distribuée spatialement dans ladite zone du système environnemental dans laquelle lesdits problèmes apparaissent, et

(b) la prise en compte de la distribution spatiale des sources et des puits pour ladite variable indicatrice qui constituent les éléments actifs du système environnemental, le procédé comprenant en outre les étapes consistant à

- définir une ou plusieurs desdites variables indicatrices ;
- identifier lesdites sources et lesdits puits pour lesdites variables indicatrices ;
- pour chaque variable indicatrice, mesurer ladite variable indicatrice, en différents points de ladite zone localisée du système environnemental, et interpoler les mesures afin d'obtenir une matrice avec un échantillonnage régulier lorsque les mesures ne peuvent pas être effectuées de manière uniforme et régulière, ladite matrice concernant les effets induits par lesdites sources et lesdits puits dans ladite zone ; et
- appliquer la théorie générale des champs implémentée dans des algorithmes de traitement d'images à ladite matrice, ce qui donne des images ou des fonctions bidimensionnelles représentant les mesures des variables indicatrices sélectionnées, afin de localiser les sources et les puits et déterminer la charge relative, c'est-à-dire la capacité de modification d'espace, avec laquelle chaque source ou chaque puit contribuent à la distribution spatiale de ladite variable indicatrice.

**2.** Procédé selon la revendication 1, qui comprend en outre l'obtention de la fonction de modification d'espace d'une variable indicatrice induite par une source ou un puit unitaire, et en option, la prédiction de la distribution spatiale de ladite variable indicatrice en utilisant ladite fonction de modification d'espace pour ladite variable indicatrice pour une distribution spatiale différente des sources et des puits.

SCALE 1 / 50 000

Figure 1.

16

Figure 2.

SCALE 1 / 50 000

- 0.70
- 12.02
- 23.35
- 34.67
- 46.00
- 57.32
- 68.65
- 79.97
- 91.30
- 102.62
- 113.95
- 125.27
- 136.60
- 147.92
- 159.25
- 170.57
- 181.90

Figure 3.

Figure 4.

| | |
|---|---|
| | 0.00 |
| | 10.74 |
| | 21.49 |
| | 32.23 |
| | 42.97 |
| | 53.72 |
| | 64.46 |
| | 75.21 |
| | 85.95 |
| | 96.69 |
| | 107.44 |
| | 118.18 |
| | 128.92 |
| | 139.67 |
| | 150.41 |
| | 161.16 |
| | >=171.90 |

Figure 5.

Figure 6.

Figure 7.

Figure 8.

SCALE 1 / 50 000

Figure 9.

Figure 10.

Figure 11.

Figure 12.

Figure 13.

Figure 14.

Figure 15.

Figure 16.

Figure 17.

Figure 18.

Figure 19.

EP 1 720 129 B1

Figure 20.

35